# EUROPÄISCHE PATENTSCHRIFT

(11) **EP 3 070 389 B1**
(45) Veröffentlichungstag und Bekanntmachung des Hinweises auf die Patenterteilung: **19.09.2018**
(21) Anmeldenummer: 16160270.1
(22) Anmeldetag: 15.03.2016
(51) Int. Cl.: F16L 33/18, F16L 33/22

(54) **SCHLAUCHVERSCHRAUBUNG**
SCREW COUPLING FOR HOSES
RACCORD A VIS

(30) Priorität: 19.03.2015 DE 102015204988
(43) Veröffentlichungstag der Anmeldung: 21.09.2016
(73) Patentinhaber: Fraunhofer-Gesellschaft zur Förderung der angewandten Forschung e.V., 80686 München (DE)
(72) Erfinder: Boye, André, 01156 Dresden (DE); Weyrauch, Thomas, 01237 Dresden (DE)
(74) Vertreter: Pfenning, Meinig & Partner mbB

(56) Entgegenhaltungen:
- EP-A1- 2 592 322
- DE-A1- 2 026 707
- US-A- 2 877 027
- US-A- 4 427 219
- US-A- 4 900 068

## Beschreibung

Die Erfindung betrifft eine Schlauchverschraubung, die besonders hohe hygienische Anforderungen bei bewegten Elementen erfüllen kann. Speziell für den Bereich der Lebensmittel- und Pharmaindustrie, wo derartige Schlauchverschraubungen zum Einsatz kommen, bedarf es technisch und hygienisch geeigneter Lösungen, die aber zum jetzigen Zeitpunkt insbesondere an bewegten Systemen nicht im erforderlichen Maße verfügbar sind.

Die Herstellung qualitativ hochwertiger und hygienisch einwandfreier Produkte hat in der Lebensmittelindustrie, der Pharmaindustrie, der Medizintechnik und auch in der Biotechnologie höchste Priorität und wird gesetzlich gefordert. Durch eine automatisierte Verarbeitung wird ein wichtiger Beitrag zur Garantie der Sicherheit geleistet, da hierdurch die Reproduzierbarkeit erhöht und der Mensch als größte Kontaminations- und Unsicherheitsquelle vom händischen Eingriff bei der Verarbeitung ausgeschlossen werden sollte.

Allerdings bedarf es technisch und hygienisch geeigneter Lösungen für Bauteile/Baugruppen, die die Anforderungen von Hygienebereichen erfüllen und somit unbedenklich eingesetzt werden können.

In nahezu allen Bereichen der Technik sind Schläuche als flexible Leitungen zur Förderung von festen, flüssigen und gasförmigen Stoffen im Einsatz. Mittels sogenannter Schlauchverschraubungen werden diese mit den jeweiligen Baugruppen/Komponenten verbunden.

Um einen Austausch zwischen den Stoffen in der Leitung und der Umwelt zu vermeiden, müssen Schlauchverschraubungen, insbesondere in Hygienebereichen, bestimmte Anforderungen erfüllen. Dazu gehört neben der Dichtheit eine ausreichend hohe Klemmung des jeweiligen Schlauches, um einen sicheren Einsatz auch bei höheren Drücken (> 6 bar) zu gewährleisten.

Zusätzlich sollen Bereiche vermieden werden, die einer Reinigung nicht zugänglich sind, und in denen mikrobielles Wachstum erfolgen könnte.

Im Lebensmittel- und Pharmabereich sind Schlauchverschraubungen in hygienischer Ausführung weit verbreitet und entsprechen den einschlägigen Richtlinien (z.B. EHEDG). Sie sind für den Einsatz (Montage) an statischen (unbewegten) Baugruppen konzipiert, wie beispielsweise an Schaltschränken und Ventilinseln.

Jedoch erlebt dieser Industriebereich einen stetigen Zuwachs an Automatisierung, was den Einsatz von Robotern, Manipulatoren und Greifwerkzeugen erfordert. Viele der eingesetzten Komponenten/Aktoren sind bewegte Baugruppen, die mit Fluiden betrieben werden und sich im direkten Produktbereich befinden. Eine Anpassung der Schlauchverschraubungen an die neuen Einsatzbereiche ist bislang nicht erfolgt. Alle derzeitigen Systeme weisen für den Einsatz an bewegten Baugruppen erhebliche Schwachstellen in der hygienegerechten Umsetzung auf, was zu unkalkulierbaren Risiken führt.

Das zu klemmende Element (Schlauch) wird üblicherweise durch eine Durchgangsöffnung in die Verschraubung geführt. Anschließend erfolgt die Klemmung durch das Anziehen einer Überwurfmutter, wodurch im Inneren ein Dichteinsatz und ein Lamellenkorb gestaucht werden und dadurch ein Schlauch im Inneren geklemmt wird. Diese Art der Klemmung ist in hygienischer Ausführung in Hygienebereichen weit verbreitet.
Diese bekannten Systeme sind nur für unbewegte Systeme geeignet. Bei bewegten Elementen, wie sie an Greifvorrichtungen befestigt sein können, besteht ein hygienisches Risiko. Durch die Bewegung der Baugruppe und/oder des Schlauches kommt es zu Reibungen und Longitudinalbewegungen in der Klemmstelle, wodurch Substanzen oder Partikel freigesetzt werden und in das System ein- oder aus diesem herausdringen können. Ferner ist infolge der Reibung in der Klemmstelle mit hohen Materialbelastungen zu rechnen, was zu Materialbeschädigungen bis hin zu Leckagen und zu verfrühten Ausfallzeiten führt.

Ein weiteres bekanntes Prinzip nutzt eine Verschraubung mit einem Einschraubzapfen und Dichtung sowie eine Überwurfmutter zur Klemmung eines Kunststoffschlauches. Der Schlauch wird auf einen Nippel des Einschraubzapfens gesteckt. Das Anziehen der Überwurfmutter sorgt anschließend dafür, dass der Schlauch zwischen Einschraubzapfen und Überwurfmutter verpresst ist. Diese Verschraubung ist für den Anschluss an Antrieben und Ventilinseln geeignet. Bei einem Einsatz an bewegten Baugruppen weist sie einige Mängel auf.

Analog zum vorangegangenen Beispiel, besteht auch hier das größte Risiko in der Klemmstelle. Die Dichtung erfolgt ausschließlich über die Verpressung des Schlauchs zwischen Einschraubzapfen und Überwurfmutter. Zudem kommt es in Folge der Zapfengeometrie zu keiner konstanten Pressung über die Klemmflächenfläche, sondern zu einer lokalen Spannungsspitze am größten Querschnitt.

Ein weiterer Nachteil ist der immer gleiche Abstand zwischen Zapfen und Überwurfmutter, was bei Schläuchen unterschiedlicher Härte zu unterschiedlichen Klemmkräften führt. Dies kann beispielsweise bei Schläuchen mit hoher Elastizität bei Anlegen von Drücken zu einem Ausfall führen.

Zusammengefasst stellen die beschriebenen Varianten aus hygienischer Sicht eine unzureichende Lösung dar. Ein hygienisch unbedenklicher Einsatz von Schlauchverschraubungen an bewegten Baugruppen kann somit bisher nicht gewährleistet werden.

So ist aus EP 2 592 322 A1 ein flüssigkeitsdichter Fitting bekannt.
In US 4,427,219 A ist eine Druckkupplung beschrieben.
Eine Hochdruckschlauchkupplung mit einer Dichtung ist in US 2,877,027 A offenbart.
US 4,900,068 A betrifft einen flüssigkeitsdichten Verbinder für flexible Leitungen und Rohre.

Es ist daher Aufgabe der Erfindung, die hygienegerechte Ankupplung von Schläuchen auch an bewegten Baugruppen zu ermöglichen und damit den sicheren Einsatz in hygienisch sensiblen Bereichen zu gewährleisten.

Erfindungsgemäß wird diese Aufgabe mit einer Schlauchverschraubung, die die Merkmale des Anspruchs 1 oder des Anspruchs 2 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Schlauchverschraubung ist ein Schlauch auf einen im Inneren hohlen Anschlussstutzen bis zu einem an einem Basiselement des Anschlussstutzens ausgebildeten ersten Anschlag aufsteckbar. Außen um den Schlauch herum sind ein rotationssymmetrisches hülsenförmiges Klemmelement bis zu dem ersten Anschlag oder einem weiteren am Basiselement ausgebildeten Anschlag und auf der dem Basiselement abgewandten Seite ein rotationssymmetrisches hülsenförmiges aus einem elastisch verformbaren Material gebildetes Dichtelement aufsteckbar. Dabei ist eine mit einer Bohrung, durch die der Schlauch mit einem Teil des Anschlussstutzens hindurchgeführt ist, versehene Überwurfmutter mit einem Innengewinde versehen. Das Innengewinde kann mit einem Außengewinde, das am Klemmelement oder dem Basiselement ausgebildet ist, verbunden werden. Im verschraubten Zustand ist das Dichtelement mittels des Klemmelements gegen die stirnseitige konisch ausgebildete Innenwand der Überwurfmutter, an der die Bohrung ausgebildet ist, mit einer Druckkraft beaufschlagt, die zu einer Verformung des Dichtelements führt, so dass der Spalt zwischen dem Schlauch und der Bohrung der Überwurfmutter abgedichtet ist. Außerdem ragt ein Bereich des Anschlussstutzens auf dem der Schlauch aufgesteckt ist, mit einer Länge, die mindestens einem Drittel der Gesamtlänge des Anschlussstutzens oder mindestens der Hälfte des Innendurchmessers, bevorzugt mindestens des Innendurchmessers und besonders bevorzugt mindestens dem Zweifachen des Innendurchmessers des Schlauches entspricht, aus der Überwurfmutter heraus.

Die der Bohrung gegenüberliegende Stirnfläche der Überwurfmutter sollte bei der Verschraubung an einem Anschlag, der am Basiselement des Anschlussstutzens ausgebildet ist, anliegen. Der Anschlag kann so ein Widerlager bilden und das Klemmelement kann so bei der Verschraubung der Gewinde gegen das Dichtelement bewegt werden, um das Dichtelement für die Abdichtung des Spaltes zwischen Schlauch und Bohrung zu verformen.

Vorteilhaft sollten sich berührende Stirnflächen von Klemmelement und Dichtelement in entgegengesetzter Richtung zueinander in einem Winkel geneigt ausgerichtet sein. Sie bilden somit schiefe Ebenen, die bei der Bewegung aneinander entlang gleiten, was sich bei einer Bewegung des Klemmelements beim Verschrauben gegen das Dichtelement günstig auswirken kann.

Zwischen der äußeren Mantelfläche des auf dem Anschlussstutzen aufgesteckten Schlauches, dem Klemmelement und der Überwurfmutter im Inneren der Überwurfmutter kann ein hülsenförmiges Ausgleichselement oder mindestens ein Distanzelement für den Ausgleich unterschiedlicher Härten des Schlauchmaterials und/oder unterschiedlicher Schlauchaußendurchmesser angeordnet werden. Dadurch kann eine ausreichende konstante Pressung auch bei weicheren Schlauchmaterialien mit kleinerer Shore-Härte oder auch bei unterschiedlichen Schlauchdurchmessern erreicht werden, so dass diese sicher und fluiddicht in der Schlauchverschraubung fixiert gehalten werden können.

Für einen sichereren Halt des Schlauches am Anschlussstutzen kann an der äußeren Oberfläche des Anschlussstutzens in einem Bereich, in dem der Schlauch aufgesteckt ist, mindestens ein Profilelement zur Erreichung einer formschlüssigen Verbindung ausgebildet sein. Ein oder mehrere Profilelemente sollten im Inneren der Überwurfmutter im montierten Zustand angeordnet sein.

An der Stirnfläche der Überwurfmutter, an der die Bohrung ausgebildet ist, abgewandten Stirnfläche kann ein einen Spalt zwischen Überwurfmutter und Basiselement verschließendes weiteres Dichtelement vorhanden sein, mit dem auch dort eine sichere Abdichtung zwischen dem Inneren und dem Äußeren (Produktbereich) erreicht werden kann.

Vorteilhaft ist im Bereich des Anschlussstutzens, der im montierten Zustand aus der Überwurfmutter herausragt, mindestens ein Festkörpergelenk ausgebildet. Dadurch können Bewegungen des Schlauches noch besser kompensiert und vom Klemmbereich weiter fern gehalten werden. Ein oder mehrere Festkörpergelenk(e) kann/können als rillenförmige Vertiefung im Anschlussstutzen ausgebildet sein. Dadurch kann der Anschlussstutzen mit dem Schlauch dort bei Bewegungen eine Biegung vollziehen, wodurch die auf den Klemmbereich zwischen Dichtelement, Klemmelement und äußerer Mantelfläche des dort fixierten Schlauches wirkenden Kräfte und Momente weiter reduziert werden können.

Durch die mit der Erfindung erreichbare Fixierung und Stabilisierung des Schlauchs an der Dichtstelle können Kontaminationen vermieden werden. Es ist eine Sicherstellung einer reproduzierbaren (immer gleichen) Schlauchklemmung und einer definierten Pressung an der Abdichtstelle, unabhängig von der Härte des Schlauchmaterials (Härte in shore) möglich.

Der verlängerte Anschlussstutzen (Tülle) wird in das Bauteil bzw. Baugruppe geschraubt. Parallel dazu wird der Schlauch mittels Überwurfmutter, einem rotationssymmetrischen hülsenförmigen Dichtelement und einem rotationssymmetrischen hülsenförmigen Klemmelement geschoben und auf den Anschlussstutzen bis zu einem Anschlag aufgesteckt. Anschließend erfolgt die Klemmung durch ein Verschrauben der Überwurfmutter mit einem am Klemmelement oder an einem Basiselement des Anschlussstutzens vorhandenen Außengewinde. Die Klemmstelle zwischen Überwurfmutter, Klemmelement und der äußeren Mantelfläche des auf den Anschlussstutzen aufgesteckten Schlauches sollte so konzipiert sein, dass ein Schlauch mit höherer Festigkeit (62 shore) ausreichend sicher geklemmt werden kann. Bei Schläuchen mit niedrigeren Festigkeiten besteht die Option, mittels Einlegen einer Distanzscheibe oder einer Hülse den Klemmspalt zu verkleinern und somit eine optimale Klemmung zu realisieren. Diese Lösung ermöglicht eine sichere Schlauchklemmung auch bei unterschiedlichen Schlauchfestigkeiten und - durchmessern.

Nach der Klemmung ist das Innenleben der Schlauchverschraubung durch die Überwurfmutter von der Umgebung gekapselt. Die Überwurfmutter ist so gestaltet, dass das hülsenförmige Dichtelement beim Verschrauben gegen das Klemmelement gedrückt und somit definiert gegen den Schlauch gepresst wird. Ein Anschlag im unteren Bereich der Überwurfmutter und/oder am Basiselement sorgt für einen immer gleichen Spannweg und eine konstante Pressung zwischen Schlauch, Klemmelement und Überwurfmutter.

Im Fall von bewegten Systemen können die Schlauchbewegungen durch den verlängerten Teil des Anschlussstutzens, der im montierten Zustand aus der Überwurfmutter herausragt von der Klemmstelle ferngehalten werden. Im Bereich der Klemmstelle, in dem eine Berührung zwischen Schlauch, Dichtelement und Klemmelement auftritt, kommt es zu keinen Relativbewegungen, die durch von außen initiierte Bewegungen des Schlauches auftreten könnten. Der Anschlussstutzen, auf dem ein Schlauch aufgesteckt ist, sollte dabei ein Drittel seiner Gesamtlänge oder mit einer Länge, der Hälfte des Innendurchmessers, bevorzugt des Innendurchmessers und besonders bevorzugt mindestens dem Zweifachen des Innendurchmesser des jeweiligen Schlauches entspricht, über den Rand der Überwurfmutter hinausragen. Durch diese Lösung kann eine hermetische Trennung zum inneren Produktbereich realisiert werden. Unerwünschte Substanzen/Stoffe können somit nicht in das System hinein- oder herausdringen.

Es kann eine definierte Pressung im Bereich, in dem der Schlauch in der Schlauchverschraubung fixiert ist, erreicht werden. Mit Distanzscheiben oder Hülsen mit angepassten Durchmessern kann eine Schlauchklemmung für Schläuche mit unterschiedlichen Härten oder Außendurchmessern realisiert werden. Es ist auch eine Stabilisierung des Schlauchs durch den verlängerten Anschlussstutzen, der über die eigentliche Dichtstelle und Klemmstelle hinausragt, möglich.

Die erfindungsgemäße Schlauchverschraubung weist eine Zugänglichkeit zur Reinigung sowohl im montierten, wie auch im demontierten Zustand auf. Es kann in beiden Zuständen eine Desinfektion und Reinigung durchgeführt werden.

Es kann ein vollständig geschlossenes System, bei dem der äußere Produktbereich vom Innenleben der Schlauchverschraubung getrennt ist, zur Verfügung gestellt werden.

Es ist eine einfache, kostengünstige und wirtschaftliche Fertigung (Drehteile, Stanzteile oder Fertigung im Spritzgussverfahren) möglich.

Bevorzugt kann die Schlauchverschraubung an bewegten Systemen, wie beispielsweise Greifern, eingesetzt werden. Durch den im montierten Zustand nach außen verlängerten Anschlussstutzen kann der daran befestigte Schlauch stabilisiert werden, auch wenn der jeweilige Schlauch außerhalb der Schlauchverschraubung bewegt wird. Es können Bewegungen im Dicht- und Klemmbereich vermieden werden, wodurch sich Produktschutz und hygienische Sicherheitsaspekte besser als zuvor berücksichtigen lassen.

Nachfolgend soll die Erfindung anhand eines Beispiels näher erläutert werden.

Dabei zeigt:

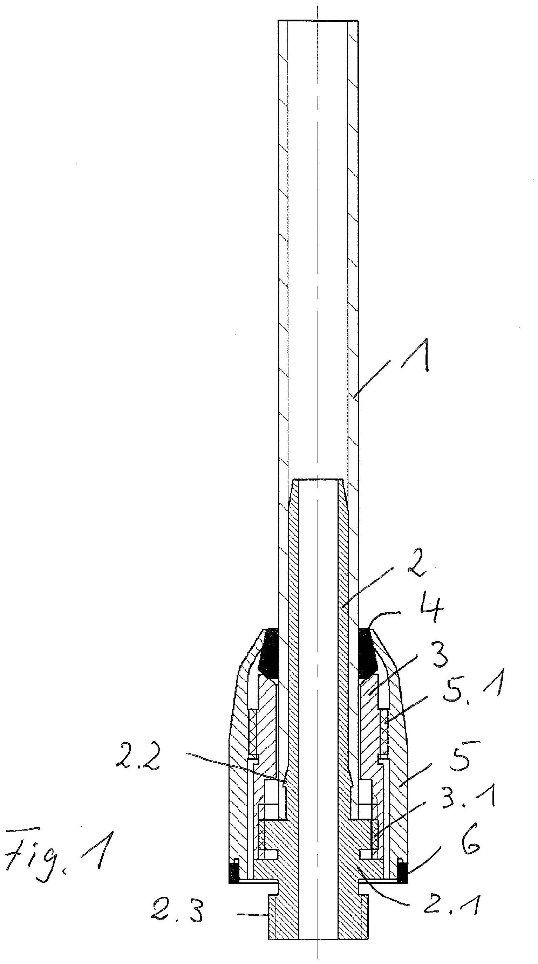

Figur 1 eine Schnittdarstellung durch ein Beispiel einer erfindungsgemäßen Schlauchverschraubung.

In Figur 1 ist ein Beispiel einer erfindungsgemäßen Schlauchverbindung in einer Schnittdarstellung gezeigt. Dabei ist ein Schlauch 1 auf einen innen hohlen hülsenförmigen Anschlussstutzen 2 bis zu einem Anschlag, der an einem Basiselement 2.1 des Anschlussstutzens 2 ausgebildet ist, von außen aufgesteckt. Über den Schlauch 1 sind ein Klemmelement 3 und ein Dichtelement 4 aufgesteckt. Das Klemmelement 3 ist rotationssymmetrisch und hülsenförmig ausgebildet. Es besteht aus einem festen Werkstoff, beispielsweise einem Metall. Das Dichtelement 4 ist ebenfalls rotationssymmetrisch und hülsenförmig ausgebildet und besteht aus einem Elastomer. Die aufeinander zu weisenden Stirnflächen von Klemmelement 3 und Dichtelement 4 sind schräg geneigt, so dass die beiden sich berührenden Flächen schiefe Ebenen bilden.

Bei diesem Beispiel ist an der äußeren Mantelfläche des Klemmelements 3 ein Außengewinde ausgebildet, das mit einem Innengewinde 5.1 der Überwurfmutter 5 verschraubt werden kann. Bei der Verschraubung von Klemmelement 3 und Überwurfmutter 5 bewegt sich das Klemmelement 3 in Richtung einer Bohrung, die an der Überwurfmutter 5 ausgebildet ist und durch die der Schlauch 1 und ein Bereich des Anschlussstutzens 2 hindurch geführt sind. Dabei erfolgt eine Verformung des Dichtelements 4, wodurch der Spalt zwischen der Bohrung der Überwurfmutter 5 und der äußeren Mantelfläche des Schlauchs 1 abgedichtet wird.

Ein weiteres Gewinde 3.1 ist an der inneren Mantelfläche des Klemmelements 3 vorhanden, das mit einem komplementären Außengewinde am Basiselement 2.1 verschraubt werden kann, um damit eine Verbindung zwischen Klemmelement 3 und Anschlussstutzen 2 herstellbar ist.

In nicht dargestellter Form kann auf die gezeigten Gewinde 3.1 und 5.1 auch verzichtet werden. Anstelle dessen kann ein Innengewinde an der Überwurfmutter 5 im Bereich des Basiselements 2.1 mit einem dort ausgebildeten Außengewinde verschraubt werden. Das Klemmelement 3 stützt sich dabei an einem am Basiselement 2.1 ausgebildeten Anschlag für das Klemmelement 3 mit einer Stirnfläche ab, so dass beim Verschrauben der Überwurfmutter 5 mit dem Gewinde am Basiselement 2.1 eine definierte Druckkraft von der gegenüberliegenden Stirnfläche des Klemmelements 3 auf das Dichtelement 4 gegen den Spaltbereich an der Bohrung der Überwurfmutter 5 ausgeübt wird und so der Spalt dort sicher und definiert abgedichtet werden kann.

An der Stirnfläche der Überwurfmutter 5, die an der der Bohrung abgewandten Seite angeordnet ist, ist ein weiteres Dichtelement 6 angeordnet.

Im Bereich des Anschlussstutzens 2, der im montierten Zustand im Inneren der Überwurfmutter 5 angeordnet ist, ist ein Profilelement 2.2 für eine formschlüssige Fixierung des Schlauchs 1 an der Oberfläche ausgebildet. Das Profilelement 2.2 ist eine Erhebung, die an einer Seite schräg geneigt ist, so dass der Schlauch 1 von dort leichter aufsteckbar ist. An diese Schräge schließt sich eine senkrechte Kante oder eine Kante an, die eine Hinterschneidung bilden kann.

Am Basiselement 2.1 ist weiter ein Außengewinde 2.3 ausgebildet, mit dem die Schlauchverschraubung mit einem Bauteil oder einer weiteren Schlauchverschraubung mit komplementärem Innengewinde verbunden werden kann (nicht gezeigt).

Es ist außerdem nicht gezeigt, dass zwischen der äußeren Mantelfläche des Schlauches 1 und der inneren Mantelfläche des Klemmelements 3 ein hülsenförmiges Element angeordnet werden kann. Dadurch kann eine Anpassung an unterschiedliche Materialhärten des Schlauches 1 erreicht werden, indem eine größere Presskraftwirkung zwischen Schlauch 1, Klemmelement 3 und Dichtelement 4 bei weicherem Schlauchmaterial erreicht werden kann, so dass eine sichere Dichtwirkung und Fixierung des Schlauchs 1 auch bei höheren Drücken im Inneren des Schlauchs 1 und kleinerer Härte des Schlauchmaterials erreichbar ist.

Der Anschlussstutzen 2 ragt bei diesem Beispiel mit einer Länge, die dem 2,5-Fachen des Außendurchmessers des Schlauches 1 entspricht aus der Bohrung der Überwurfmutter 5 heraus, so dass keine Biege- oder anderen Bewegungen im kritischen Dicht- und Klemmbereich des Schlauches 1 an der Schlauchverschraubung auftreten können, auch wenn sich der Schlauch 1 außerhalb davon bewegt und insbesondere verschwenkt oder gebogen wird.

## Patentansprüche

1. Schlauchverschraubung mit einem Schlauch (1), wobei der Schlauch (1) auf einen im Inneren hohlen Anschlussstutzen (2) bis zu einem an einem Basiselement (2.1) des Anschlussstutzens (2) ausgebildeten ersten Anschlag aufsteckbar ist und außen um den Schlauch (1) herum ein rotationssymmetrisches hülsenförmiges Klemmelement (3) bis einem weiteren am Basiselement (2.1) ausgebildeten Anschlag und auf der dem Basiselement (2.1) abgewandten Seite ein rotationssymmetrisches hülsenförmiges aus einem elastisch verformbaren Material gebildetes Dichtelement (4) aufsteckbar sind, wobei
eine mit einer Bohrung, durch die der Schlauch (1) mit einem Teil des Anschlussstutzens (2) hindurchgeführt sind, versehene Überwurfmutter (5) mit einem Innengewinde (5.1) versehen ist, das mit einem Außengewinde, das am Klemmelement (3) ausgebildet ist, verbindbar ist, und im verschraubten Zustand das Dichtelement (4) mittels des Klemmelements (3) gegen die stirnseitige konisch ausgebildete Innenwand der Überwurfmutter (5), an der die Bohrung ausgebildet ist, mit einer Druckkraft beaufschlagt ist, die zu einer Verformung des Dichtelements (4) führt, so dass der Spalt zwischen dem Schlauch (1) und der Bohrung der Überwurfmutter (5) abgedichtet ist, und
ein Bereich des Anschlussstutzens (2) auf dem der Schlauch (1) aufgesteckt ist, mit einer Länge, die mindestens einem Drittel der Gesamtlänge des Anschlussstutzens (2) oder mindestens der Hälfte des Innendurchmessers des Schlauches (1) entspricht, aus der Überwurfmutter (5) herausragt und
ein weiteres Gewinde (3.1) an der inneren Mantelfläche des Klemmelements (3) vorhanden ist, das mit einem komplementären Außengewinde am Basiselement (2.1) verschraubbar ist.

2. Schlauchverschraubung mit einem Schlauch (1), wobei der Schlauch (1) auf einen im Inneren hohlen Anschlussstutzen (2) bis zu einem an einem Basiselement (2.1) des Anschlussstutzens (2) ausgebildeten ersten Anschlag aufsteckbar ist und außen um den Schlauch (1) herum ein rotationssymmetrisches hülsenförmiges Klemmelement (3) bis zu dem ersten Anschlag oder einem weiteren am Basiselement (2.1) ausgebildeten Anschlag und auf der dem Basiselement (2.1) abgewandten Seite ein rotationssymmetrisches hülsenförmiges aus einem elastisch verformbaren Material gebildetes Dichtelement (4) aufsteckbar sind, wobei
eine mit einer Bohrung, durch die der Schlauch (1) mit einem Teil des Anschlussstutzens (2) hindurchgeführt sind, versehene Überwurfmutter (5) mit einem Innengewinde (5.1) versehen ist, das mit einem Außengewinde, das am Basiselement (2.1) ausgebildet ist, verbindbar ist, und im verschraubten Zustand das Dichtelement (4) mittels des Klemmelements (3) gegen die stirnseitige konisch ausgebildete Innenwand der Überwurfmutter (5), an der die Bohrung ausgebildet ist, mit einer Druckkraft beaufschlagt ist, die zu einer Verformung des Dichtelements (4) führt, so dass der Spalt zwischen dem Schlauch (1) und der Bohrung der Überwurfmutter (5) abgedichtet ist, und
ein Bereich des Anschlussstutzens (2) auf dem der Schlauch (1) aufgesteckt ist, mit einer Länge, die mindestens einem Drittel der Gesamtlänge des Anschlussstutzens (2) oder mindestens der Hälfte des Innendurchmessers des Schlauches (1) entspricht, aus der Überwurfmutter (5) herausragt,
wobei eine Stirnfläche des Klemmelements (3) bei der Verschraubung der Überwurfmutter (5) am ersten oder am weiteren Anschlag, der am Basiselement (2.1) des Anschlussstutzens (2) ausgebildet ist, anliegt.

3. Schlauchverschraubung nach Anspruch 1 oder 2, **dadurch gekennzeichnet, dass** die der Bohrung gegenüberliegende Stirnfläche der Überwurfmutter (5) und/oder eine Stirnfläche des Klemmelements (3) bei der Verschraubung am ersten oder am weiterem Anschlag, der am Basiselement (2.1) des Anschlussstutzens (2) ausgebildet ist, anliegt.

4. Schlauchverschraubung nach einem der vorhergehenden Ansprüche, **dadurch gekennzeichnet, dass** sich berührende Stirnflächen von Klemmelement (3) und Dichtelement (4) in entgegengesetzter Richtung zueinander in einem Winkel geneigt ausgerichtet sind.

5. Schlauchverschraubung nach einem der vorhergehenden Ansprüche, **dadurch gekennzeichnet, dass** zwischen der äußeren Mantelfläche des auf dem Anschlussstutzen (2) aufgesteckten Schlauches (1), dem Klemmelement (3) und der Überwurfmutter (5) im Inneren der Überwurfmutter (5) ein hülsenförmiges Ausgleichselement oder mindestens ein Distanzelement für den Ausgleich unterschiedlicher Härten des Schlauchmaterials und/oder unterschiedlicher Schlauchaußendurchmesser anordenbar ist.

6. Schlauchverschraubung nach einem der vorhergehenden Ansprüche, **dadurch gekennzeichnet, dass** an der äußeren Oberfläche des Anschlussstutzens (2) in einem Bereich, in dem der Schlauch (1) aufgesteckt ist, mindestens ein Profilelement (2.2) zur Erreichung einer formschlüssigen Verbindung ausgebildet ist.

7. Schlauchverschraubung nach einem der vorhergehenden Ansprüche, **dadurch gekennzeichnet, dass** an der der Stirnfläche der Überwurfmutter (5) an der die Bohrung ausgebildet ist, abgewandten Stirnfläche ein Dichtelement (6) vorhanden ist.

8. Schlauchverschraubung nach einem der vorhergehenden Ansprüche, **dadurch gekennzeichnet, dass** im Bereich des Anschlussstutzens (2), der im montierten Zustand aus der Überwurfmutter (5) herausragt, mindestens ein Festkörpergelenk ausgebildet ist.

## Claims

1. A hose screw connection having a hose (1), wherein the hose (1) can be plugged onto a connector stub (2) hollow inside up to a first abutment formed at a base element (2.1) of the connector stub (2); wherein a rotationally symmetrical sleeve-like clamping element (3) can be plugged outwardly around the hose (1) up to a further abutment formed at the base element (2.1) and a rotationally symmetrical sleeve-like sealing element (4) formed from an elastically deformable material can be plugged on at the side remote from the base element (2.1); wherein a cap nut (5) provided with a bore through which the hose (1) and a part of the connector stub (2) are led is provided with an internal thread (5.1) that can be connected to an external thread that is formed at the clamping element (3) and the sealing element (4) is acted on by a compressive force in the screwed state by means of the clamping element (3) against the inner wall of the cap nut (5) that is formed conically at the front side at which cap nut (5) the bore is formed, said compressive force producing a deformation of the sealing element (4) so that the gap between the hose (1) and the bore of the cap nut (5) is sealed; and wherein a region of the connector stub (2) on which the hose (1) is plugged projects out of the cap nut (5) by a length that corresponds to at least a third of the total length of the connector stub (2) or to at least half the inner diameter of the hose (1); and wherein a further thread (3.1) is present at the inner jacket surface of the clamping element (3) that can be screwed to a complementary external thread at the base element (2.1).

2. A hose screw connection having a hose (1), wherein the hose (1) can be plugged onto a connector stub (2) hollow inside up to a first abutment formed at a base element (2.1) of the connector stub (2); wherein a rotationally symmetrical sleeve-like clamping element (3) can be plugged outwardly around the hose (1) up the first abutment or up to a further abutment formed at the base element (2.1) and a rotationally symmetrical sleeve-like sealing element (4) formed from an elastically deformable material can be plugged on at the side remote from the base element (2.1); wherein a cap nut (5) provided with a bore through which the hose (1) and a part of the connector stub (2) are led is provided with an internal thread (5.1) that can be connected to an external thread that is formed at the base element (2.1) and the sealing element (4) is acted on by a compressive force in the screwed state by means of the clamping element (3) against the inner wall of the cap nut (5) that is formed conically at the front side at which cap nut (5) the bore is formed, said compressive force producing a deformation of the sealing element (4) so that the gap between the hose (1) and the bore of the cap nut (5) is sealed; and wherein a region of the connector stub (2) on which the hose (1) is plugged projects out of the cap nut (5) by a length that corresponds to at least a third of the total length of the connector stub (2) or to at least half the inner diameter of the hose (1); and wherein a front surface of the clamping element (3) contacts the first abutment or the further abutment that is formed at the base element (2.1) of the connector stub (2) on the screwing on of the cap nut (5).

3. A hose screw connection in accordance with claim 1 or claim 2, **characterized in that** the front surface of the cap nut (5) disposed opposite the bore and/or a front surface of the clamping element (3) contacts the first abutment or the further abutment that is formed at the base element (2.1) of the connector stub (2) on the screwing on.

4. A hose screw connection in accordance with one of the preceding claims, **characterized in that** contacting front surfaces of the clamping element (3) and of the sealing element (4) are aligned in opposite directions to one another inclined at an angle.

5. A hose screw connection in accordance with one of the preceding claims, **characterized in that** a sleeve-like compensation element or at least one spacer element can be arranged in the interior of the cap nut (5) between the outer jacket surface of the hose (1) plugged onto the connector stub (2), the clamping element (3) and the cap nut (5) for the compensation of different hardnesses of the hose material and/or different external hose diameters.

6. A hose screw connection in accordance with one of the preceding claims, **characterized in that** at least one section element (2.2) is formed at the outer surface of the connector stub (2) in a region in which the hose (1) is plugged on to achieve a shape-matched connection.

7. A hose screw connection in accordance with one of the preceding claims, **characterized in that** a sealing element (6) is present at the front surface remote from the front surface of the cap nut (5) at which the bore is formed.

8. A hose screw connection in accordance with one of the preceding claims, **characterized in that** at least one solid body joint is formed in the region of the connector stub (2) that projects out of the cap nut (5) in the assembled state.

## Revendications

1. Raccord vissé de tuyau avec un tuyau (1), le tuyau (1) pouvant être enfiché sur un manchon de raccordement creux interne (2) jusqu'à une première butée réalisée sur un élément de base (2.1) du manchon de raccordement (2) et à l'extérieur autour du tuyau (1) pouvant être enfiché un élément de serrage (3) en forme de manchon à symétrie de rotation, jusqu'à une autre butée réalisée sur l'élément de base (2.1) et, un élément d'étanchéité (4) en forme de manchon à symétrie de rotation, constitué d'un matériau à déformation élastique pouvant être enfiché sur le côté opposé à l'élément de base (2.1),
un écrou de raccordement (5), muni d'un alésage à travers lequel sont guidés le tuyau (1) ainsi qu'une partie du manchon de raccordement (2), étant munie d'un filetage interne (5.1) qui peut être relié avec un filetage externe réalisé sur l'élément de serrage (3) et, dans l'état vissé, l'élément d'étanchéité (4) étant sollicité par une force de compression, au moyen de l'élément de serrage (3) contre la paroi interne frontale conique de l'écrou de raccordement (5), sur lequel est réalisé l'alésage, ce qui provoque la déformation de l'élément d'étanchéité (4) de façon à ce que l'interstice entre le tuyau (1) et l'alésage de l'écrou de raccordement (5) soit étanchéifié et
une longueur de la partie du manchon de raccordement (2) sur laquelle le tuyau (1) est enfiché, qui correspond à au moins un tiers de la longueur totale du manchon de raccordement (2) ou à au moins la moitié du diamètre intérieur du tuyau (1), dépasse de l'écrou de raccordement (5) et
un autre filetage (3.1) est prévu sur la surface d'enveloppe interne de l'élément de serrage (3), qui peut être vissé avec un filetage externe complémentaire sur l'élément de base (2.1).

2. Raccord vissé de tuyau avec un tuyau (1), le tuyau (1) pouvant être enfiché sur un manchon de raccordement creux interne (2) jusqu'à une première butée réalisée sur un élément de base (2.1) du manchon de raccordement (2) et à l'extérieur autour du tuyau (1) pouvant être enfiché un élément de serrage (3) en forme de manchon à symétrie de rotation, jusqu'à la première butée ou une autre butée réalisée sur l'élément de base (2.1) et un élément d'étanchéité (4) en forme de manchon à symétrie de rotation, constitué d'un matériau à déformation élastique pouvant être enfiché sur le côté opposé à l'élément de base (2.1),
un écrou de raccordement (5), muni d'un alésage à travers lequel sont guidés le tuyau (1) ainsi qu'une partie du manchon de raccordement (2), étant munie d'un filetage interne (5.1) qui peut être relié avec un filetage externe réalisé sur l'élément de serrage (3) et, dans l'état vissé, l'élément d'étanchéité (4) étant sollicité par une force de compression, au moyen de l'élément de serrage (3) contre la paroi interne frontale conique de l'écrou de raccordement (5), sur lequel est réalisé l'alésage, ce qui provoque la déformation de l'élément d'étanchéité (4) de façon à ce que l'interstice entre le tuyau (1) et l'alésage de l'écrou de raccordement (5) soit étanchéifié et
une longueur de la partie du manchon de raccordement (2) sur laquelle le tuyau (1) est enfiché, qui correspond à au moins un tiers de la longueur totale du manchon de raccordement (2) ou à au moins la moitié du diamètre intérieur du tuyau (1), dépasse de l'écrou de raccordement (5),
une face frontale de l'élément de serrage (3) s'appuyant, lors du vissage de l'écrou de raccordement (5), contre la première ou l'autre butée, qui est réalisée sur l'élément de base (2.1) du manchon de raccordement (2).

3. Raccord vissé de tuyau selon la revendication 1 ou 2, **caractérisé en ce que** la face frontale, opposée à l'alésage, de l'écrou de raccordement (5) et/ou une face frontale de l'élément de serrage (3) s'appuie, lors du vissage, contre la première ou l'autre butée, qui est réalisée sur l'élément de base (2.1) du manchon de raccordement (2).

4. Raccord vissé de tuyau selon l'une des revendications précédentes, **caractérisé en ce que** les faces frontales en contact de l'élément de serrage (3) et de l'élément d'étanchéité (4) sont orientées dans des directions opposées entre elles de façon à être inclinées entre elles d'un angle déterminé.

5. Raccord vissé de tuyau selon l'une des revendications précédentes, **caractérisé en ce que**, entre la surface d'enveloppe externe du tuyau (1) enfiché sur le manchon de raccordement (2), l'élément de serrage (3) et l'écrou de raccordement (5), à l'intérieur de l'écrou de raccordement (5), peut être disposé un élément de compensation en forme de manchon ou au moins un élément d'écartement pour la compensation des différences de duretés du matériau du tuyau et/ou des différences de diamètres extérieurs des tuyaux.

6. Raccord vissé de tuyau selon l'une des revendications précédentes, **caractérisé en ce que**, sur la surface externe du manchon de raccordement (2), dans une zone, dans laquelle le tuyau (1) est enfiché, est prévu au moins un élément profilé (2.2) permettant d'établir une liaison par complémentarité de forme.

7. Raccord vissé de tuyau selon l'une des revendications précédentes, **caractérisé en ce que**, sur la face frontale opposée à la face frontale de l'écrou de raccordement (5), sur lequel est réalisé l'alésage, est prévu un élément d'étanchéité (6).

8. Raccord vissé de tuyau selon l'une des revendications précédentes, **caractérisé en ce que**, dans la partie du manchon de raccordement (2) qui dépasse de l'écrou de raccordement (5) dans l'état monté, est prévu au moins une articulation à corps solides.
